# EUROPÄISCHE PATENTANMELDUNG

(11) **EP 2 903 250 A1**
(43) Veröffentlichungstag der Anmeldung: **05.08.2015**
(21) Anmeldenummer: 14153489.1
(22) Anmeldetag: 31.01.2014
(51) Int. Cl.: H04N 1/195, G03B 21/10, H04N 1/38

(54) **Bildaufnahmeverfahren mit adaptiver Markierlichtemission und ebensolches Bildaufnahmegerät**

(71) Anmelder: WolfVision Innovation GmbH, 6833 Klaus (AT)
(72) Erfinder: Kresser, Clemens, 6912 Hörbranz (AT)
(74) Vertreter: Holzheu, Christian

(57) **Zusammenfassung**

Bildaufnahmeverfahren zur Bilderfassung mit einem Bildaufnahmegerät (10), wobei das Bildaufnahmegerät (10) aufweist eine Kamera (14) mit einem Bildsensor (13) und einem Objektiv (12), wobei die Kamera (14) einen in einem Bild erfassbaren und zumindest mittels des Objektivs (12) einstellbaren Bildaufnahmebereich (19) definiert und der Bildsensor (13) eine Erfassungsfläche mit einer Vielzahl von Bildpixeln zur Bilderfassung aufweist und die Bildpixel in Pixelgruppen ansteuerbar und auslesbar sind, und eine Markiereinheit (16) mit einer Lichtquelle zur Emission von Markierlicht (17). Im Rahmen des Bildaufnahmeverfahrens erfolgen ein Emittieren des Markierlichts (17) derart, dass eine visuell wahrnehmbare Lichtmarkierung (18) innerhalb des Bildaufnahmebereichs (19) erzeugt wird, und ein Bilderfassen des Bildaufnahmebereichs (19) mittels der Kamera (14). Das Emittieren des Markierlichts erfolgt (17) derart vorbestimmt, dass die erzeugte Lichtmarkierung (18) innerhalb eines dieser zugewiesenen und einen Teilbereich des Bildaufnahmebereichs (19) bildenden Lichtauftreffbereichs erzeugt wird und der Lichtauftreffbereich durch eine Teilmenge bekannter Sub-Bildpixel aus der Vielzahl von Bildpixeln erfassbar ist, und das Bilderfassen mit einem pixelgruppenweise zeitlich versetztem Sammeln von Belichtungsinformation erfolgt, wobei für das Sammeln der Belichtungsinformation für jede Pixelgruppe, welche mindestens ein Sub-Bildpixel umfasst, das Emittieren des Markierlichts (17) angepasst, insbesondere unterbrochen, wird.

## Beschreibung

Die Erfindung betrifft ein Bildaufnahmeverfahren zur Bilderfassung eines Objekts mit einem Bildaufnahmegerät nach dem Oberbegriff des Anspruchs 1, ein entsprechendes Bildaufnahmegerät zum Erfassen eines Bilds nach dem Oberbegriff des Anspruchs 11 und ein Computerprogrammprodukt zur Steuerung bzw. Ausführung des Bildaufnahmeverfahrens nach Anspruch 15.

Im Rahmen einer solchen Bilderfassung sind die damit erfassbaren bzw. zu erfassenden Objekte hierbei insbesondere sowohl als zweidimensionale Objekte in Form optischer Informationsträger wie Bilder im herkömmlichen Sinn, beispielsweise Zeichnungen, Fotografien, Diapositive und Röntgenaufnahmen, Textseiten, Schriftstücke, Präsentationsfolien, als auch als dreidimensionale Objekte wie beispielsweise Modelle, Bauteile, Bücher und lebende oder tote Körper oder Körperteile, einschliesslich eines allfälligen Hindergrunds oder Umfeldes des jeweiligen eigentlichen Objekts, zu verstehen.

Bekannte gattungsgemässe Bildaufnahmegeräte des Stands der Technik (so genannte "Visualizer") umfassen üblicherweise eine (Video-) Kamera, die auf einen Bereich, der das aufzunehmende Objekt zumindest teilweise beinhaltet, ausrichtbar ist, mit einem - insbesondere fokussierbaren und zoombaren - Objektiv, gegebenenfalls ein Spiegelsystem zur Umlenkung des Strahlengangs von dem Objektiv in die Videokamera, sowie meist eine Lichtquelle zur Beleuchtung des Objekts. Der Bereich ist bei den meisten bekannten Geräten Bestandteil des Geräts selbst und wird von einer Auflagefläche zum Auflegen des aufzunehmenden Objekts gebildet. Bei anderen bekannten, insbesondere an der Decke montierten Ausführungsformen wird der Bereich jedoch von einer beliebigen Fläche, beispielsweise einer Tisch- oder Wandoberfläche, einem Operationstisch oder der Oberfläche eines beliebigen lebenden oder toten Objekts gebildet.

Das Bild des Objekts bzw. des Bereichs wird von der Kamera aufgenommen und in ein insbesondere elektrisches Signal umgewandelt, das einem Bildwiedergabegerät, beispielsweise einem Bildschirm, einem Monitor oder einem Projektor, oder einem Bildverarbeitungsgerät, insbesondere einem Computer, zugeführt wird. Beispielsweise ermöglicht das Bildwiedergabegerät einer grossen Zuschauerzahl die Betrachtung eines kleinen Objekts, das von einer Bedienperson des Bildaufnahmegeräts auf die Auflagefläche platziert wird und an welchem gegebenenfalls Eingriffe durch die Bedienperson durchgeführt werden.

In der DE 102 04 660 A1 wird ein Bildaufnahmegerät mit einer Begrenzungsanzeige beschrieben. Das Bildaufnahmegerät besitzt einen Bildsensor, einen Konus, einen Haltearm, eine Basis und einen Begrenzungsanzeiger. Der Bildsensor befindet sich in dem Konus und dient zum Aufnehmen eines Bilds von einem Objekt sowie zum Erzeugen eines entsprechenden Bildsignals. Der Haltearm verbindet den Konus mit der Basis. Der Begrenzungsanzeiger umfasst mindestens ein - vorzugsweise vier - Lämpchen, insbesondere Laserlämpchen, im Rand des Konus, um Licht zu emittieren, welches den Bildaufnahmebereich des Bildaufnahmegeräts direkt am Objekt kennzeichnet. Somit ist es nicht mehr erforderlich, dass der Benutzer zur Platzierung und Ausrichtung des Objekts im Bildaufnahmebereich in einen Monitor, der das aufgenommene Bild wiedergibt, blicken muss. Es ist direkt am Objekt erkennbar, wo sich der Bildaufnahmebereich befindet. Dies ist vor allem bei Vorträgen oder Präsentationen vorteilhaft, bei welchen die Bildwiedergabe sich nicht im unmittelbaren Sichtbereich des Vortragenden, der gleichzeitig das Bildaufnahmegerät bedient, befindet.

Ein eigener Monitor für den Vortragenden kann somit entfallen. Weiters ist ein wesentlich schnelleres Ausrichten des Objekts möglich. Zur Bildvergrösserung oder -verkleinerung wird der Abstand zwischen dem Objekt und dem Konus durch Verstellen des Haltearms verkleinert bzw. vergrössert. Aufgrund der seitlichen Anordnung der Lämpchen am Konus neben dem Bildsensor und der somit getrennten Strahlengänge führt die Abstandsverkleinerung oder - vergrösserung jedoch zu einer geringfügigen Deplatzierung der Kennzeichnung zum Bildaufnahmebereich. Ein weiterer Nachteil dieser Ausgestaltung besteht darin, dass der fest eingestellte Begrenzungsanzeiger den Einsatz eines Bildsensors mit Zoomobjektiv verunmöglicht, da die fixe Begrenzungsanzeige bei Veränderung der Brennweite nicht mehr dem Bildaufnahmebereich entspricht.

Die EP 0 362 737 A1 beschreibt ein Gerät für das Umwandeln von Bildern oder Abbildern in Videosignale. Bei diesem Gerät ist ein verstellbares erstes Objektiv einer Kamera gemeinsam mit einer Lichtquelle, die ein verstellbares zweites Objektiv aufweist, über ein Spiegelsystem auf eine Projektionsfläche gerichtet. Die Projektionsfläche kann an dem Gerät oder aber auch daneben liegen. Das erste Objektiv der Kamera ist hierbei mit dem zweiten Objektiv der Lichtquelle derart gekoppelt, dass sich im Bereich der Projektionsfläche eine Deckung der Querschnitte des Aufnahmestrahlengangs und des Beleuchtungsstrahlengangs ergibt, wodurch die Lichtfläche mit der Aufzeichnungsfläche zusammenfällt. Das Auffinden des von der Kamera aufgenommenen Bereichs ist hiermit unabhängig von der Einstellung des ersten Objektivs der Kamera für eine Bedienperson leicht möglich, da durch Kopplung der Kamera mit der Beleuchtung, insbesondere des ersten und zweiten Objektivs, der aufgenommene Bereich deutlich sichtbar dem von der Lichtquelle beleuchteten Bereich entspricht. Eine Anpassung der Zoomeinstellung auf die Grösse des aufzunehmenden Objekts sowie ein Ausrichten des Objekts auf den Aufnahmeort oder umgekehrt ist somit durch ein Orientieren an der beleuchteten Fläche möglich, da die Lichtquelle gleichzeitig als Begrenzungsanzeige dient. Die Strahlengänge der Beleuchtung und der Aufnahme sind bezüglich des Linsensystems durch die zwei Objektive getrennt, um Streulichteffekte und Reflexionen zu verhindern, welche die Bildqualität negativ beeinflussen würden. Ein Nachteil dieser Ausgestaltung besteht im verhältnismässig komplexen, grossen und schweren Aufbau des Geräts, da zwei verstellbare, miteinander gekoppelte Objektive und ein Spiegelsystem zur Erzeugung eines langen Strahlengangs zwischen den beiden in einem Winkel zwischen 1 bis 5 Grad nebeneinander angeordneten Objektiven erforderlich sind, um Schattenwirkungen am Objekt zu vermeiden.

Die CH 698 323 B1 offenbart ein Bildaufnahmegerät mit einer Kamera, einer Markiereinrichtung zur Erzeugung einer optischen Markierung und einer Einkoppeleinheit zur Einkopplung des Markierlichts in den Strahlengang der Kamera, so dass sowohl ein von der Kamera erfassbarer Bildbereich als auch die Strahlführung für das Markierlicht mittels einer Verstellung des Kameraobjektivs anpassbar ist. Zur Bilderfassung mittels des Bildaufnahmegeräts wird der Bildsensor in einem bestimmten Intervall global belichtet und ausgelesen, wobei zwischen jeweiligen Belichtungs- und Ausleseintervallen eine Abtastlücke besteht.

Gattungsgemässe, heutige Visualizer sollen eine hohe Bildauflösung (z.B. Full-HD) bei einer gleichzeitig hohen Bilderfassungsfrequenz (z.B. 60 fps) bereitstellen. Da heute insbesondere mit CMOS-Sensoren obige Kriterien erfüllt werden können, werden für die Bilderfassung mit Visualizern typischerweise solche Sensoren eingesetzt. Weitere Anforderungen an die einsetzbaren Bildsensoren sind deren Raumbedarf und der mit der Beschaffung verbundene Kostenaufwand. CMOS-Sensoren mit einem "Global-Shutter", d.h. die Bilderfassung erfolgt zeitgleich über den gesamten Erfassungsbereich des Sensors, sind meist verhältnismässig teuer in der Anschaffung und erfüllen oft nicht die gegebenen Grössenanforderungen. Hingegen lassen sich die Kosten- und Grössenbedingungen mit einem CMOS-Sensor mit "Rolling-Shutter" (zeitversetzte Bilderfassung über die Erfassungsfläche) erfüllen.

Als Problem bei der Verwendung eines Sensors mit "Rolling-Shutter" ergibt sich jedoch, dass das Markierlicht nicht generell nur für die Dauer des Bilderfassens mit dem Sensor abgestellt werden kann, da das Bilderfassen kontinuierlich erfolgt und dadurch dann keine Markierung mehr sichtbar wäre. Eine zeitliche Bilderfassungslücke, in der das Licht emittiert werden könnte, ohne es im Bild mit zu erfassen, ist hierbei nicht mehr gegeben.

Aufgabe der vorliegenden Erfindung ist es daher, ein verbessertes Bildaufnahmegerät und ein verbessertes Bilderfassungsverfahren zur Bildaufnahme zur Verfügung zu stellen, bei welchem eine Bilderfassung mit verbesserter Auflösung und Erfassungsrate erfolgt, eine Markierung für einen jeweiligen Bilderfassungsbereich verfügbar ist und gleichzeitig diese Markierung nicht in einem resultierenden Bild sichtbar ist.

Eine weitere Aufgabe der Erfindung ist das Bereitstellen eines solchen Geräts bzw. Verfahrens, wobei der mit der Bilderfassung, insbesondere hinsichtlich des Bildsensors, verbundene Kostenaufwand verhältnismässig klein zu gattungsgemässen Systemen ist.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Bildaufnahmeverfahren zur Bilderfassung mit einem Bildaufnahmegerät. Das Bildaufnahmegerät weist eine Kamera mit einem Bildsensor und einem Objektiv auf, wobei die Kamera einen in einem Bild erfassbaren und zumindest mittels des Objektivs einstellbaren Bildaufnahmebereich definiert und der Bildsensor eine Erfassungsfläche mit einer Vielzahl von Bildpixeln zur Bilderfassung aufweist und die Bildpixel in Pixelgruppen ansteuerbar und auslesbar sind. Das Objektiv der Kamera ist beispielsweise als Zoom-Objektiv ausgebildet und stellt dadurch ein veränderbares Sichtfeld der Kamera und einen ebenso veränderbaren Bildaufnahmebereich auf einer Oberfläche bereit. Der Bildaufnahmebereich wird mittels des Objektivs entsprechend auf den Bildsensor abgebildet. Zudem verfügt das Bildaufnahmegerät über eine Markiereinheit mit einer Lichtquelle zur Emission von Markierlicht.

Im Rahmen des Bildaufnahmeverfahrens erfolgen ein Emittieren des Markierlichts derart, dass eine visuell wahrnehmbare Lichtmarkierung innerhalb des Bildaufnahmebereichs erzeugt wird, und ein Bilderfassen des Bildaufnahmebereichs mittels der Kamera.

Durch die so erzeugte Lichtmarkierung auf einer Oberfläche bzw. an einem in dem Bild zu erfassenden Objekt kann ein Benutzer des Bildaufnahmegeräts das Objekt derart relativ zu oder in dem Bildaufnahmebereich platzieren, dass ein dann erfasstes Bild das Objekt oder einen Ausschnitt davon in gewünschter Weise abbildet. Die Markiereinheit verfügt z.B. über eine Anzahl von Laserdioden und wenigstens eine strahlformende Optik und ermöglicht das Erzeugen eines oder mehrerer Lichtpunkte oder -muster.

Gemäss der Erfindung erfolgt das Emittieren des Markierlichts derart vorbestimmt, dass die Lichtmarkierung innerhalb eines dieser zugewiesenen und einen Teilbereich des Bildaufnahmebereichs bildenden Lichtauftreffbereichs erzeugt wird und der Lichtauftreffbereich durch eine Teilmenge bekannter Sub-Bildpixel aus der Vielzahl von Bildpixeln erfassbar ist. Das Bilderfassen erfolgt dabei mit einem pixelgruppenweise zeitlich versetztem Sammeln von Belichtungsinformation, wobei für das Sammeln der Belichtungsinformation für jede Pixelgruppe, welche mindestens ein Sub-Bildpixel umfasst, das Emittieren des Markierlichts angepasst, insbesondere unterbrochen, wird.

Die Pixel des Bildsensors sind elektronisch ansteuerbar, wobei jedes Pixel einzeln oder die Pixel in bestimmten Gruppen angesteuert werden können. Eine Pixelgruppe ist im Rahmen der Erfindung als eine Anzahl (und Anordnung) von Bildpixeln des Bildsensors zu verstehen, wobei eine Pixelgruppe auch nur einen einzelnen Bildpixel umfassen kann. Durch eine entsprechende Ansteuerung einer Pixelgruppe kann mit dieser Gruppe für einen gewissen Zeitraum Licht gesammelt und die dabei durch das Licht verkörperte Lichtinformation als die Belichtungsinformation erfasst und gesammelt werden. Hierfür sind mindestens zwei, vorzugsweise jedoch mehrere, Pixelgruppen definiert.

Ein derartiges sequenzielles Bilderfassen eines Bildes mit einem Bildsensor erfolgt also prinzipiell nach der Methode eines "Rolling Shutters".

Die Pixelgruppen sind dabei vorzugsweise so definiert, dass die Gesamtheit der Pixelgruppen sämtliche Bildpixel des Sensors umfasst, wobei jeder Bildpixel mindestens einer Pixelgruppe zugeordnet ist, jedoch auch gleichzeitig mehreren Gruppen zugeordnet sein kann, so dass überlappende Pixelgruppen definiert sind und eine Belichtungsinformation für zumindest bestimmte Teile des Bildaufnahmebereichs mehrfach gesammelt werden kann.

Der Vorgang des Sammelns der Belichtungsinformation mit einem solchen Bildsensor wird fachgemäss auch als Belichten der jeweiligen Pixelgruppe bezeichnet, wobei als Belichten nicht das tatsächliche Auftreffen von Licht auf den Sensor, sondern allein das elektronisch gesteuerte Informationserfassen mit der Pixelgruppe bezeichnet wird. Es handelt sich also um ein elektronisch gesteuertes Belichten einer Pixelgruppe im Sinne des Sammelns der Belichtungsinformation.

Mit erfindungsgemässen Bildsensoren können Bilder somit dadurch erfasst werden, dass die Belichtungsinformation pixelgruppenweise und für alle Pixelgruppen des Sensors (also für die gesamte Erfassungsfläche des Sensors) gesammelt wird, diese Information entsprechende ausgelesen wird und aus der ausgelesenen Bildinformation ein Bild erzeugt wird. Nach dem Auslesen der Bildinformation oder dem tatsächlichen Erzeugen des Bildes wird die Belichtungsinformation für die jeweiligen Pixel gelöscht, so dass ein erneutes Sammeln neuer Belichtungsinformation erfolgen kann. Das Löschen der Belichtungsinformation erfolgt ebenfalls mittels einer elektronischen Schaltung.

Durch die vorliegende Erfindung kann also ein Objekt mit einem "Visualizer" (Bilderfassungsgerät) in einem Bild oder einer Bildsequenz, insbesondere einem (Echtzeit-) Videostream, erfasst werden und die dabei erzeugbaren Bildsignale an ein Bildausgabegerät (Projektor, Bildschirm etc.) übertragen werden. Die Bilderfassung erfolgt dabei ohne das Erfassen der projizierten Lichtmarkierung, indem die Markierung z.B. abgestimmt auf das jeweils teilweise Belichten des Bildsensors abgeschaltet oder umgelenkt wird. Die derartige Manipulation der Lichtemission ist insbesondere abgestimmt auf das zeitlich versetzte Belichten einzelner Pixelgruppen.

Gemäss spezifischer Ausführungen der Erfindung erfolgt das Bildaufnahmeverfahren derart, dass für jede Pixelgruppe ein bestimmter Belichtungszeitraum definiert ist und das Sammeln der Belichtungsinformation im Rahmen des jeweiligen Belichtungszeitraums erfolgt. Dabei erfolgt das Sammeln der Belichtungsinformation pixelgruppenweise sukzessive mit zeitlich einander nachfolgenden Belichtungszeiträumen und/oder pixelgruppenweise zeitlich überlappend mit überlappenden Belichtungszeiträumen.

Es wird also Pixelgruppe für Pixelgruppe nacheinander belichtet (elektronische gesteuert belichtet = Sammeln der Belichtungsinformation) oder eine erste Gruppe bleichtet und während des Belichtens dieser ersten Gruppe bereits eine zweite Gruppe oder mehrere nachfolgende Gruppen belichtet. Mit einem zeitlich überlappten Belichten kann beispielsweise eine schnellere Erzeugung eines resultierenden Gesamtbildes realisiert werden.

In diesem Zusammenhang - aber auch allein betrachtete d.h. isoliert davon - erfolgt erfindungsgemäss im Rahmen einer weiteren Ausführungsform das Sammeln der Belichtungsinformation und ein Auslesen der jeweils gesammelten Belichtungsinformation für jeweilige Pixelgruppen innerhalb eines gemeinsamen Zeitfensters, insbesondere gleichzeitig, insbesondere wobei die Belichtungsinformation während des Auslesens gesammelt wird, oder zeitlich versetzt, insbesondere zeitlich aufeinander abgestimmt, insbesondere synchronisiert.

Demnach kann z.B. zunächst allein ein Sammeln von Belichtungsinformation (für jeweilige Pixelgruppen) erfolgen und das Auslesen der Information zeitlich nachgeordnet erfolgen.

Hinsichtlich der Einteilung der Erfassungsfläche des Bildsensors repräsentieren die Pixelgruppen gemäss einer bestimmten Ausführungsform der Erfindung jeweils eine Teilfläche aus benachbarten Bildpixeln der Erfassungsfläche. Eine solche Teilfläche kann z.B. eine geometrische Anordnung von Bildpixeln beispielsweise in Form eines Quadrates oder eines Rechtecks sein.

Im Rahmen der Erfindung repräsentieren die Pixelgruppen insbesondere jeweils eine lineare Abfolge von benachbarten Bildpixeln, insbesondere wobei jede Pixelgruppe mindestens einer Sensorzeile oder mindestens einer Sensorspalte der Erfassungsfläche entspricht. Gemäss einer solchen Ausführungsform kann das Bilderfassen, d.h. das Sammeln der Belichtungsinformation (Belichten) und insbesondere das Auslesen, also zeilen- oder spaltenweise erfolgen. Dadurch wird eine grössere Menge von Bildpixeln gleichzeitig angesteuert und ausgewertet, was in einer schnelleren Bilderzeugung korrespondierend zum gesamten Erfassungsbereich des Bildsensors resultiert.

Für das abgestimmte Ansteuern des Markierlichts wird dabei insbesondere verglichen, ob die aktuell zu erfassende Sensorzeile einen von dem Markierlicht getroffenen Bereich (Lichtauftreffbereich) schneidet, d.h. ob ein Pixel der Zeile in diesem Bereich liegt, und abhängig davon das Markierlicht angepasst oder nicht.

Gemäss einer spezifischen Ausgestaltung der Erfindung ist der Lichtauftreffbereich derart festgelegt (bzw. definiert), dass die Fläche des Lichtauftreffbereichs zwischen 5% und 60% der Fläche des Bildaufnahmebereichs umfasst, insbesondere zwischen 10% und 50%, insbesondere wobei die Sub-Bildpixel zwischen 5% und 60% der Bildpixel der Erfassungsfläche verkörpern, insbesondere zwischen 10% und 50%. Dadurch kann eine optimierte Grösse für den Lichtauftreffbereich bestimmt werden, wobei zum einen eine ausreichende Lichtmenge, d.h. vom Benutzer gut wahrnehmbar, auf den Bildaufnahmebereich emittiert wird und zum anderen eine effiziente Bilderfassung - hinsichtlich des Zeitbedarfs und der dafür nötigen Anpassung des Markierlichts - erreicht wird.

Bezüglich der Ausgestaltung des Emittierens des Markierlichts erfolgt dies erfindungsgemäss insbesondere derart, dass die Lichtmarkierung als mindestens ein Lichtpunkt, insbesondere in der Mitte des Bildaufnahmebereichs, und/oder als ein Lichtmuster, insbesondere als Linie, erzeugt wird. Beispielsweise kann so ein optischer Rahmen projiziert werden, durch den der Bildaufnahebereiche, d.h. der Bereich der auf den Bildsensor abgebildet wird, angezeigt wird. Alternativ oder zusätzlich können bestimmte Referenzpunkte eingeblendet werden, anhand derer ein Benutzer des Systems für eine gewünschte Orientierung für ein zu erfassendes Objekt angeleitet werden kann.

Erfindungsgemäss liegt für bestimmte Ausführungsformen der Erfindung beim Erfassen des Bildaufnahmebereichs ein Abstand zwischen dem Objektiv und einem zu erfassenden Objekt von 0,3 m bis 15 m, insbesondere von 0,4 m bis 10 m, vor, insbesondere wobei eine Fokussierung des Markierlichts in Abhängigkeit von dem Abstand automatisch nachgeführt wird. Beispielsweise kann das Bildaufnahmegerät über eine Autofokusfunktion verfügen, mittels derer das Objektiv automatisch gesteuert ein- bzw. nachgestellt wird.

Ferner erfolgt gemäss einer weiteren Ausführung der Erfindung - zusätzlich oder alternativ - ein Anpassen der Emissionsrichtung des Markierlichts in Abhängigkeit von dem Abstand, insbesondere derart, dass die Lichtmarkierung fortlaufend an einer gewünschten Position erzeugt wird, insbesondere in einem Schnittpunkt der optischen Achse der Kamera mit dem Bildaufnahmebereich. Hierfür kann beispielsweise die Markiereinheit entsprechend (automatisch) ausgerichtet werden oder es ist z.B. eine Spiegelanordnung in der Markiereinheit vorgesehen, mittels derer die Anpassung der Emissionsrichtung realisiert wird.

Insbesondere erfolgt das Erfassen des Bildaufnahmebereichs erfindungsgemäss wiederholt mit einer bestimmten Frequenz, wobei das Sammeln der Belichtungsinformation für die jeweiligen Pixelgruppen mit jeweils der bestimmten Frequenz erfolgt, insbesondere wobei der Bildaufnahmebereich bzw. die Pixelgruppen 10-1000 mal pro Sekunde, insbesondere 30-60 mal pro Sekunde, erfasst bzw. ausgelesen werden.

Ferner erfolgt gemäss einer weiteren Ausführungsform der Erfindung das Emittieren und/oder das Anpassen des Emittierens des Markierlichts abgestimmt mit dem Sammeln der Belichtungsinformation für jene Pixelgruppen, welche mindestens ein Sub-Bildpixel umfassen, insbesondere wobei das Emittieren gepulst erfolgt, die Lichtquelle sequenziell abgeschaltete wird und/oder die Emission des Markierlichts geblockt oder umgelenkt wird.

Gemäss einer spezifischen Ausführung erfolgt ein Beleuchten der Erfassungsfläche des Bildsensors derart sukzessive und segmentiert, dass jeweils zwischen 5% und 50%, insbesondere zwischen 10% und 50%, der Erfassungsfläche beleuchtet werden, insbesondere mittels einer verstellbaren Blendeneinrichtung, insbesondere wobei das sukzessive Beleuchten und das Sammeln der Belichtungsinformation aufeinander abgestimmt, insbesondere synchronisiert, sind. Dieses Beleuchten reguliert den tatsächlichen Lichteinfall auf den Sensor und betrifft nicht das Belichten - also nicht das (elektronisch gesteuerte) Sammeln von Belichtungsinformation - im Sinne der Erfindung.

Die Erfindung betrifft ferner ein Bildaufnahmegerät zum Erfassen eines Bilds, mit einer Kamera mit einem Bildsensor und einem Objektiv, wobei die Kamera einen in einem Bild erfassbaren und zumindest mittels des Objektivs einstellbaren Bildaufnahmebereich definiert und der Bildsensor eine Erfassungsfläche mit einer Vielzahl von Bildpixeln zur Bilderfassung aufweist und die Bildpixel in Pixelgruppen ansteuerbar und auslesbar sind. Das Bildaufnahmegerät weist zudem eine Markiereinheit mit einer Lichtquelle zur Erzeugung einer visuell wahrnehmbaren Lichtmarkierung innerhalb des Bildaufnahmebereichs mittels Emission von Markierlicht auf.

Erfindungsgemäss ist die Markiereinheit derart ausgebildet und angeordnet, dass der erzeugbaren Lichtmarkierung mindestens ein definierter Lichtauftreffbereich in dem Bildaufnahmebereich zuweisbar ist und der Lichtauftreffbereich durch eine Teilmenge bekannter Sub-Bildpixel aus der Vielzahl von Bildpixeln erfassbar ist (in einem Bild mittels der Kamera). Das Bildaufnahmegerät stellt einen dadurch definierten Bilderfassungsmodus bereit, dass in dessen Rahmen der Bildaufnahmebereich mit einem pixelgruppenweise sukzessiven Sammeln von Belichtungsinformation derart gesteuert in einem Bild erfassbar ist, dass für das Sammeln der Belichtungsinformation für jede Pixelgruppe, welche mindestens ein Sub-Bildpixel umfasst, die erzeugbare Lichtmarkierung anpassbar ist, insbesondere unterbrechbar ist.

Durch Ausführung des Bilderfassungsmodus, insbesondere gesteuert durch eine Steuerungseinheit des

Bildaufnahmegeräts, ist somit der Bilderfassungsbereich in seiner Gesamtheit frei von der Lichtmarkierung erfassbar, insbesondere auslesbar.

Ein erfindungsgemässes Bildaufnahmegerät ist insbesondere verkörpert durch einen so genannten "Visualizer", d.h. ein System zur Erfassung von Bildern von Objekten, wobei die erfassten Bilder in Form von Bildsignalen für ein Bildausgabegerät bereitgestellt werden. Derartige Visualizer werden beispielsweise an Decken montiert und erfassen einen Bereich unterhalb der Decke, z.B. einen Tisch, auf welchem das Objekt aufgelegt wird.

Gemäss einer bestimmten Ausführungsform eines erfindungsgemässen Bildaufnahmegeräts ist die Markiereinheit derart ausgebildet und angeordnet, dass eine Ausbreitungsachse des emittierten Markierlichts in einer Ebene liegt, die festgelegt ist durch eine zur optischen Achse der Kamera parallele, insbesondere koaxiale, und den Lichtauftreffbereich schneidende Achse und durch eine Ausleserichtung für das Auslesen der Pixelgruppen, insbesondere durch eine Erstreckungsrichtung von Sensorzeilen oder Sensorspalten der Erfassungsfläche des Bildsensors. Eine solche Ausführung bietet den Vorteil, dass bei einer Änderung des Abstands zwischen dem Bildaufnahmegerät und dem aufzunehmenden Objekt und einem dabei bewirkten Versatz der Lichtmarkierung relativ zur optischen Achse der Kamera oder der jeweiligen dazu parallelen Achse diese Lichtmarkierung bei einem zeilen-oder spaltenweisen Belichten des Bildsensors und einer entsprechenden linearen Festlegung des Lichtauftreffbereichs unabhängig vom vorliegenden Abstand nicht mit erfasst wird (da diese unabhängig von deren Lage immer ausgeschaltet oder abgelenkt wird).

Gemäss einer alternativen Ausführungsform der Erfindung sind die Markiereinheit und die Kamera derart ausgebildet und angeordnet, dass das emittierbare Markierlicht in den Strahlengang der Kamera eingekoppelt wird.

Das Bildaufnahmegerät gemäss der Erfindung weist in einer spezifischen Ausführungsform mehrere Bildsensoren und insbesondere mehrere Objektive auf, wobei der Bildaufnahmebereich mittels der mehreren Bildsensoren erfassbar ist und eine der Pixelgruppen zumindest durch einen Teilbereich eines der mehreren Bildsensoren, insbesondere durch mindestens einen der mehreren Bildsensoren, gebildet wird.

Gemäss weiterer Ausführungsformen des erfindungsgemässen Bildaufnahmegeräts weist die Markiereinheit eine einstellbare strahlfokussierende Optik zur Fokussierung des Markierlichts, insbesondere in Abhängigkeit eines Abstands zwischen der Kamera und einem zu erfassenden Objekt, auf und/oder ist die Lichtquelle als Laserstrahlquelle, insbesondere Laserdiode, ausgebildet, insbesondere wobei die Markiereinheit zwei oder mehrere Lichtquellen aufweist.

Gemäss einer weiteren Ausführungsform des erfindungsgemässen Bildaufnahmegeräts weist die Markiereinheit einstellbare Strahllenkmittel zur Anpassung einer Emissionsrichtung des Markierlichts auf, insbesondere wobei die Emissionsrichtung in Abhängigkeit des Abstands zwischen der Kamera und dem zu erfassenden Objekt einstellbar ist, insbesondere automatisch.

Die Markiereinheit weist gemäss der Erfindung ferner zumindest eine der folgenden Komponenten auf:
- eine auf einem Mikrosystem (MEMS) basierende Lasereinheit,
- ein Projektionselement mit einem DLP-Element (digital light processing) und/oder einem DMD-Element (digital micromirror device) und/oder einem LCoS-Element (liquid crystal on silicon), und/oder
- einen Dünnschichttransistor (TFT) oder eine Flüssigkristallanzeige (LCD).

Die Erfindung betrifft zudem ein Computerprogrammprodukt, das auf einem maschinenlesbaren Träger gespeichert ist, zur Steuerung bzw. Ausführung eines erfindungsgemässen Bildaufnahmeverfahrens, insbesondere wenn das Computerprogrammprodukt mittels einer Steuerungseinheit eines erfindungsgemässen Bildaufnahmegeräts ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine erste Ausführungsform des erfindungsgemässen Bildaufnahmegeräts;
- Fig. 2: das erfindungsgemässe Prinzip des zeitlich versetzten Sammelns von Bildinformation mit Berücksichtigung einer Lichtmarkierung beim Bilderfassen anhand eines pixelgruppenweise auswertbaren Bildsensors;
- Figs. 3a-c: einen Bildsensor, eine Markierlichterzeugung und die Berücksichtigung der so erzeugbaren Lichtmarkierung bei der Bilderfassung mit dem Bildsensor gemäss der Erfindung;
- Fig. 4: das Prinzip des erfindungsgemässen Bildaufnahmeverfahrens mit einem Bildsensor;
- Figs. 5a-e: jeweilige Bildaufnahebereiche von spezifischen Ausführungsformen erfindungsgemässer Bildaufnahmegeräte mit jeweiligen Lichtauftreffbereichen; und
- Fig. 6: eine Vorrichtung zum Visualisieren eines Objekts mit einem erfindungsgemässen Bildaufnahmegerät.

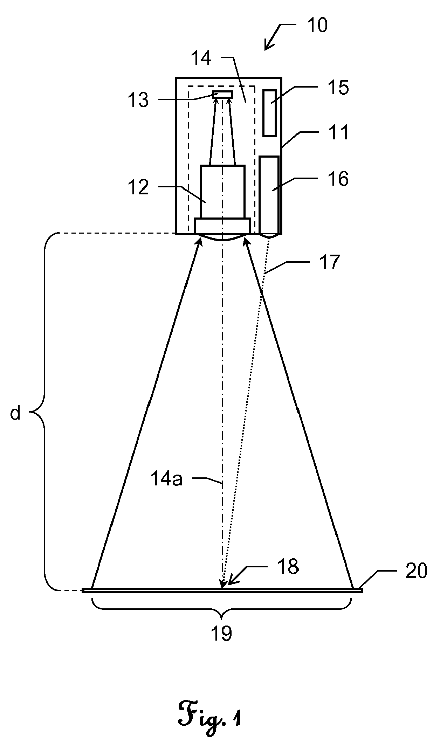

Fig. 1 zeigt eine erste Ausführungsform eines erfindungsgemässen Bildaufnahmegeräts 10. Das Bildaufnahmegerät 10 weist die Form eines unter anderem als "Visualizer" bekannten Bildaufnahmegeräts mit einem beispielsweise an eine Decke montierbarem Gehäuse 11 auf.

Das Bildaufnahmegerät 10 weist ferner eine Kamera 14 mit einem in seiner Brennweite verstellbares Objektiv 12 und einem Bildsensor 13, beispielsweise einem CCD- oder CMOS-Sensor, auf. Die Kamera 14 (= optisches System 14 mit dem Bildsensor 13 und dem Objektiv 12) definiert eine optische Achse 14a und einen Bildaufnahmebereich 19, der durch das Sichtfeld der Kamera 14 festgelegt ist bzw. mittels des Objektivs 12 eingestellt werden kann. Mit dem Bildaufnahmegerät 10 sind somit Bilder erfassbar, die den Bildaufnahmebereich 19, der durch das Objektiv 12 auf den Bildsensor 13 abgebildet wird, repräsentieren; mit anderen Worten ist der Bildaufnahmebereich 19 mittels der Kamera 14 in einem Bild erfassbar.

Die Brennweite des Objektivs 12 kann insbesondere über einen Bereich von f:4 bis f:220 manuell oder motorisiert gesteuert eingestellt werden. Ferner ist gemäss spezieller Ausführungsformen durch die Kamera 14 eine Bildauflösung zwischen 1920*1080 und 3840*2160 Pixel erzielbar.

Zudem ist eine Steuerungseinheit 15 vorgesehen, welche sowohl mit dem optischen System 14 als auch mit einer Markiereinheit 16 zur Steuerung bzw. Abstimmung dieser beiden Komponenten verbunden ist.

Die Markiereinheit 16 ist ausgebildet zur Emission eines Markierlichts 17, mittels welchem eine optische Lichtmarkierung 18, beispielsweise ein Lichtpunkt, auf einer Oberfläche innerhalb des Bildaufnahmebereichs 19 erzeugbar ist. Hierfür weist die Markiereinheit eine Lichtquelle, z.B. eine Laserstrahlquelle, insbesondere eine Laserdiode, und vorzugsweise eine das Markierlicht führende und/oder formende Optik auf. Mittels dieser Optik kann das Licht beispielsweise fokussiert und die Fokussierung auch automatisch gesteuert eingestellt werden. Der erzeugbaren optischen Lichtmarkierung 18 ist ein definierter Lichtauftreffbereich als Teilbereich des Bildaufnahmebereichs 19 zuordenbar, wodurch auch eine bestimmte Anzahl und Gruppierung von Bildpixeln des Bildsensors 13 bekannt ist, mittels derer dieser Lichtauftreffbereich bei Erfassen eines Bildes abgebildet wird (Sub-Bildpixel).

Insbesondere sind hierfür die Anordnung der Markiereinheit 16 relativ zu der Kamera 14 und die Konfiguration der Markiereinheit 16 bekannt, so dass die Lage einer Ausbreitungsachse des Markierlichts 17 relativ zur optischen Achse 14a ebenfalls bekannt ist.

Mittels der Steuerungseinheit 15 wird das Erfassen eines bzw. mehrerer Bilder mit der Kamera 14 gesteuert. Zur Erfassung eines Bildes wird hierfür mit dem Bildsensor 13 zeitlich versetzt, sequenziell und segmentiert - d.h. pixelweise oder pixelgruppenweise (wobei eine Pixelgruppe beispielsweise lediglich einen Bildpixel umfasst) - Bildinformation erzeugt und ausgelesen. So werden einzelne Pixelgruppen zeitlich versetzt "belichtet" und die dabei gesammelte Belichtungsinformation im Anschluss an das "Belichten" oder während des "Belichtens" ausgelesen. Als Belichten der Pixelgruppe ist dabei nicht ein tatsächliches physikalisches Belichten (also nicht allein ein Auftreffen von Licht auf den Sensor) zu verstehen, sondern ein Sammeln von Licht (-information) für ein gewisses Zeitintervall, wobei dieses Sammeln durch eine entsprechende elektronische Ansteuerung des Bildsensors 13 durch den Sensor 13 selbst erfolgt. Nach dem Auslesen der Belichtungsinformation wird diese sensorseitig gelöscht, wodurch ein erneutes Sammeln von neuer Belichtungsinformation mit den jeweiligen Pixelgruppen ermöglicht ist.

Erfindungsgemäss erfolgt im Rahmen des beschriebenen Bilderfassens ein Berücksichtigen der Emittierten Markierstrahlung 17, so dass in einem resultierenden Bild, welches den Bildaufnahmebereich 19 repräsentiert, die durch die Markierstrahlung 17 erzeugte Lichtmarkierung 18 nicht erfasst und sichtbar ist. Dies wird erreicht durch eine derartige Ansteuerung der Markiereinheit 16 mittels der Steuerungseinheit 15, dass das Emittieren des Markierlichts 17 für das Sammeln von solcher Belichtungsinformation, welche mindestens einem Teil des Lichtauftreffbereichs zuzuordnen ist, verändert bzw. unterbrochen wird.

Die Bildpixel des Bildsensors 13, welche wenigstens einem Lichtauftreffbereich für das Markierlicht 17 zugeordnet sind (= Sub-Bildpixel), sind aufgrund der Kenntnis über die Art und Lage der Erzeugung der Lichtmarkierung 18 bekannt. Wird nun beim pixelgruppenweise zeitlich versetzen Sammeln der Belichtungsinformation eine solche Pixelgruppe erreicht bzw. zur Bilderfassung entsprechend angesteuert, aus der mindestens ein Bildpixel einem Sub-Bildpixel entspricht, so erfolgt darauf abgestimmt das Verändern bzw. Unterbrechen der Markierlichtemission, insbesondere unmittelbar vor dem Sammeln der Lichtinformation mit dieser Pixelgruppe und insbesondere dem Auslesen dieser Pixelgruppe.

Das Verändern, Anpassen bzw. Unterbrechen des Emittierens des Markierlichts 17 kann beispielsweise realisiert sein durch ein Abschalten der Lichtquelle für ein bestimmtes Zeitintervall (z.B. gepulste Laserstrahlquelle), durch ein Ablenken des Markierlichts 17, so dass die

Lichtmarkierung 18 (während des Sammelns der Belichtungsinformation) nicht innerhalb des Bildaufnahmebereichs 19 entsteht und/oder durch ein Abschwächen, Ausblenden oder Blockieren des Markierlichts 17 (z.B. mittels einer in den Strahlengang gesteuert einschwenkbaren physikalischen Blende oder mittels einer elektronisch steuerbaren Filtereinheit).

Erfindungsgemäss wird also fortlaufend Bildinformation über die gesamte Erfassungsfläche des Bildsensors 13 hinweg gesammelt und ausgelesen. Basierend auf diesen Informationen ist ein Bild erzeugbar, das den gesamten Bildaufnahmebereich 19 abbildet, wobei die

Lichtmarkierung 18 nicht im Bild erfasst ist.

Im gezeigten Ausführungsbeispiel sind das optische System 14 und die Markiereinheit 16 derart ausgebildet und relativ zueinander positioniert, dass das Markierlicht 17 bei vorliegen eines bestimmten Abstands d zwischen Objekt 20 und Bildaufnahmegerät 10 auf dem Objekt 20 mit der optischen Achse 14a schneidet und in diesem Schnittpunkt ein Lichtfleck erzeugt wird. Die Erfindung ist jedoch keineswegs auf eine derartige Ausführungsform beschränkt, sondern umfasst vielmehr auch Ausführungsformen, welche ein alternatives Verhältnis von Markierlicht und optischer Achse aufweisen, bevorzugt jedoch derart, dass die erzeugbare Lichtmarkierung 18 innerhalb des Bilderfassungsbereichs 19 entsteht.

Ferner weist die Markiereinheit 16 gemäss einer alternativen erfindungsgemässen Ausführungsform (nicht gezeigt) eine Strahllenkeinrichtung auf, mittels derer die Ausbreitungsrichtung des Markierlichts 17 (optische Achse für das Markierlicht) eingestellt werden kann. Insbesondere kann damit eine Ausrichtung eines Markierlasers in Abhängigkeit des Abstands d, insbesondere automatisch, eingestellt werden.

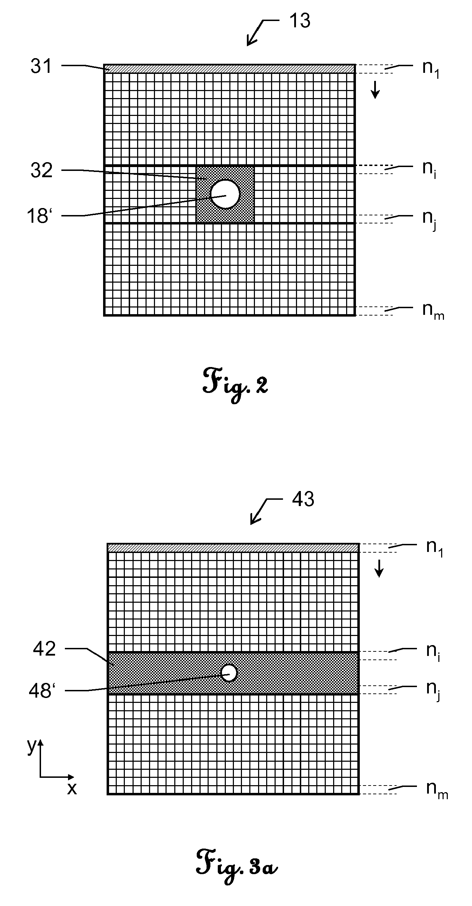

Fig. 2 zeigt das erfindungsgemässe Prinzip des zeitlich versetzten Sammelns von Bildinformation mit Berücksichtigung einer Lichtmarkierung beim Bilderfassen anhand eines pixel(-gruppen)weise auswertbaren Bildsensors 13. Der Bildsensor 13 ist als CMOS-Sensor ausgebildet.

Das Erfassen eines Bildes korrespondierend zur gesamten Erfassungsfläche des Sensors 13 erfolgt hierbei durch zeilenweises Erfassen und Auslesen von Bildinformation. Die Erfassungsfläche weist nₘ Sensorzeilen auf, wobei eine jede Sensorzeile n₁-nₘ einer Pixelgruppe entspricht. Beispielhaft gezeigt ist die Pixelgruppe 31 die der Sensorzeile n₁ entspricht. Für die Bilderfassung werden die Sensorzeilen n₁-nₘ zeitlich versetzt (z.B. sukzessive) ausgewertet, d.h. es wird z.B. vorerst Belichtungsinformation (Bildinformation in Form von auf die Pixelgruppe bzw. auf die Zeile einfallendem Licht) für die Zeile n₁ für einen bestimmten ersten Belichtungszeitraum elektronisch gesteuert gesammelt und zeitlich versetzt danach begonnen Belichtungsinformation für die Zeile n₂ ebenfalls für einen bestimmten zweiten Belichtungszeitraum zu sammeln. Die Belichtungszeiträume sind dabei insbesondere hinsichtlich der jeweiligen Dauer identisch und können zeitlich überlappen, wobei der Beginn des ersten Belichtungszeitraums zeitlich vor dem Begin des zweiten liegt. Das Sammeln der Bildinformation wird entsprechend bis zur Zeile nₘ fortgesetzt und anschliessend wiederum mit Ziele n₁ begonnen.

Durch eine Überlappung der jeweiligen Belichtungszeiträume kann somit fortlaufend Bildinformation erzeugt werden, wobei keine zeitliche Lücke hinsichtlich der Bilderfassung entsteht.

Für den Bildsensor 13 und dessen Bildpixel ist ein Sub-Sensorbereich 32 (korrespondierend zum Lichtauftreffbereich) mit einer Gruppe bestimmter Sub-Bildpixel vorbekannt, mittels welcher eine Abbildung des in Abhängigkeit des Markierlichts gegebenen Lichtauftreffbereichs im Bildaufnahmebereich im Rahmen einer Bilderfassung erfolgt. Der Sub-Sensorbereich 32 bzw. der Lichtauftreffbereich ist derart gewählt bzw. gegeben, dass der durch die erzeugte Lichtmarkierung 18 mit dem Bildsensor 13 erfassbarer Lichtfleck 18' innerhalb dieses Bereichs 32 liegt. Der Sub-Sensorbereich 32 bzw. der Lichtauftreffbereich kann dabei insbesondere derart dimensioniert vorgesehen sein, dass für das Auftreffen der Lichtmarkierung 18 bzw. des Lichtflecks 18' eine gewisse räumliche Toleranz gegeben ist, d.h. der Bereich ist dann grösser dimensioniert als der Strahlquerschnitt des Markierlichts bei Auftreffen auf dem abzubildenden Objekt.

Im Rahmen der Erfindung wird das Bilderfassen mit dem Bildsensor 13 unter Berücksichtigung des Markierlichts 17 und der dadurch erzeugten Lichtmarkierung 18 bzw. des durch den Sensor 13 erfassbaren Lichtflecks 18' durchgeführt. Bei dem zeilenweisen Bilderfassen - wie hier gezeigt - wird somit für das Sammeln von Belichtungsinformation für die Zeilen nᵢ-nⱼ, welche jeweils einen Teil des Sub-Sensorbereich 32 bzw. der Sub-Bildpixel umfassen und mit welchen also bei Emission des Markierlichts 17 der Lichtfleck 18' (mit einem bestimmten Toleranzbereich) erfasst würde, die Markierlichtemission derart angepasst (insbesondere unterbrochen), dass der Lichtfleck für den jeweiligen Belichtungszeitraum der Zeilen nᵢ-nⱼ nicht innerhalb des Bildaufnahmebereichs bzw. nicht wenigstens teilweise in einem der jeweiligen Zeile zuzuordnenden Erfassungsbereich erzeugt wird.

Insbesondere wird die Emission des Markierlichts 17 für die Erfassung der Zeilen nᵢ-nⱼ unterbrochen (z.B. durch angepasstes Pulsen des als Laserlicht emittierten Markierlichts). Insbesondere beginnt der Unterbruch unmittelbar vor Beginn des Sammelns der Belichtungsinformation der Zeile nᵢ und endet nach dem Abschluss des Sammelns der Belichtungsinformation der Zeile nⱼ.

Eine Steuerung der Markiereinheit hinsichtlich der Emission des Markierlichts und eine Steuerung des Bildsensors 13 für das zeitlich versetzt Sammeln und Auslesen von Bilddaten wird insbesondere durch eine in dem Bildaufnahmegerät integrierte Steuerungseinheit realisiert.

Durch eine spezifische Dimensionierung des Sub-Sensorbereichs 32 kann ferner ein z.B. bei einer Abstandsänderung zwischen Objekt 20 und

Bildaufnahmegerät 10 auftretender Versatz der Lichtmarkierung 18 relativ zur optischen Achse 14a derart berücksichtigt werden, dass trotz eines solchen Versatzes die Lichtmarkierung 18 nicht im Bild erfasst wird (vgl. Fig. 3a).

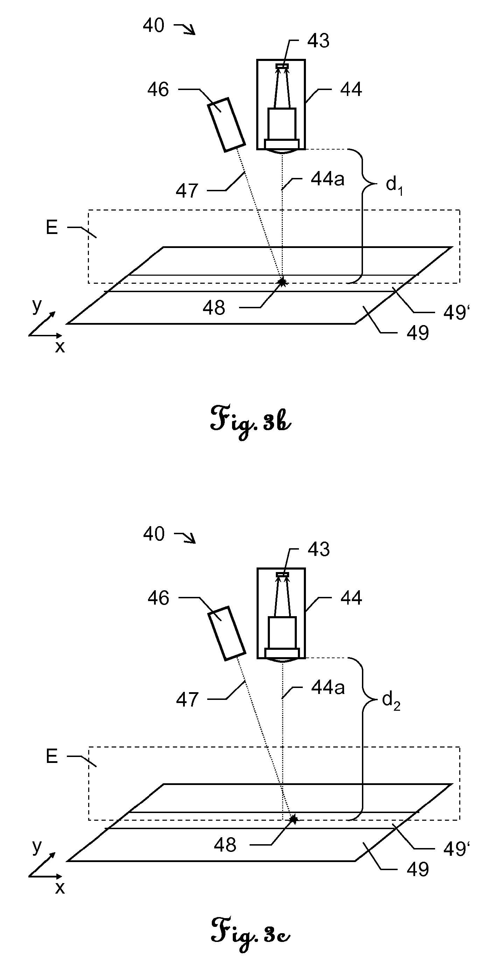

Fig. 3a wird zusammen mit Fig. 3b beschrieben und zeigt einen CMOS-Sensor 43, der in Analogie zum Bildsensor 13 gemäss Fig. 2 ein zeilenweises Erfassen von Belichtungsinformation erlaubt. Das Sammeln der Belichtungsinformation und insbesondere Auslesen der gesammelten Information erfolgt zeilenweise zeitlich versetzt (für die Sensorzeilen n₁-nₘ), wobei jede Sensorzeile eine sich in x-Richtung erstreckende Pixelgruppe aus linear benachbarten Bildpixeln bildet. Die Zeilen werden nach und nach mit einer zeitlichen Überlappung jeweiliger Zeiträume für das Sammeln der Lichtinformation ausgewertet (jeweils eine Zeile in y-Richtung).

Für den Sensor 43 und dessen Bildpixel ist wiederum ein Sub-Sensorbereich 42 (korrespondierend zum

Lichtauftreffbereich 49') mit einer Gruppe bestimmter Sub-Bildpixel definiert. Der Sub-Sensorbereich 42 erstreckt sich in x-Richtung über die gesamte Erfassungsfläche des Sensors 43 und in y-Richtung über einen Bereich zwischen den Zeilen nᵢ-nⱼ. Ein durch die Lichtmarkierung 48 durch den Bildsensor 43 erfassbarer Lichtfleck 48' würde innerhalb dieses Bereichs 42 liegen und ist zur Veranschaulichung dargestellt.

Das Bilderfassen mit dem Sensor 43 erfolgt erfindungsgemäss durch zeitlich versetztes zeilenweises Sammeln von Belichtungsinformation für jede Zeile, wobei die Emission des Markierlichts 47 derart gesteuert wird, dass für das Sammeln von Belichtungsinformation für die Zeilen nᵢ-nⱼ (während der Belichtung dieser Zeilen) die Emission so verändert oder unterbrochen wird, dass die Lichtmarkierung 48 nicht, stark abgeschwächt oder an anderer Stelle erzeugt wird.

Der Sensor 43 ist angepasst für den Einsatz in einer erfindungsgemässen Ausführungsform des Bildaufnahmegeräts 40 mit Kamera 44 und Markiereinheit 46 gemäss Fig. 3b. Die Kamera 44 definiert einen Bildaufnahmebereich 49, welcher mittels des Objektivs der Kamera 44 auf den Sensor 43 abgebildet wird. Die Markiereinheit 46 ist zur Emission eines Markierstrahls 47 ausgebildet, wobei der Strahl 47 damit derart emittierbar ist, dass dieser in einer Ebene E liegt, in der auch eine zur optischen Achse 44a der Kamera 44 parallele oder koaxiale Achse (hier: die optische Achse 44a selbst) liegt, d.h. die optische Achse 44a und eine durch den Markierstrahl 17 definierte Achse schneiden sich.

Dem Markierstrahl 47 und der dadurch erzeugbaren Lasermarkierung 48 ist ein Lichtauftreffbereich 49' als Teilbereich des Bildaufnahmebereichs 49 zugeordnet. In diesem Lichtauftreffbereich 49' verläuft eine Schnittgerade aus der Ebene E und dem Bildaufnahmebereichs 49. In einem bestimmten Abstand d₁ zwischen einem Objekt und dem Bildaufnahmegerät 40 entsteht die Lasermarkierung 48 an einer vorgesehenen Position bezüglich des Aufnahmebereichs 49, insbesondere an einem Schnittpunkt von optischer Achse 44a und Bildaufnahmebereich 49.

Wird der Abstand zwischen der Oberfläche des aufzunehmenden Objekts und Bildaufnahmegerät 40 verändert, z.B. aufgrund der Objektdicke, so verändert sich die Position der Lasermarkierung 48 innerhalb des Lichtauftreffbereich 49', insbesondere entlang der Schnittgeraden. Beispielhaft ist dies dargestellt in Fig. 3c, wobei ein grösserer Abstand d₂ zwischen Objekt und Bildaufnahmegerät 40 vorliegt und die Lasermarkierung 48 dadurch in x-Richtung versetzt erzeugt wird.

Der Bildsensor 43 ist in der Kamera 44 des Bildaufnahmegeräts 40 so angeordnet und ausgerichtet, dass die x-Richtung des Bildaufnahmebereichs 49 der x-Richtung der Erfassungsfläche des Bildsensors 43 entspricht (Analoges gilt für die y-Richtung) und dadurch dem möglichen Lichtauftreffbereich 49' entsprechende, genau diesen Bereich 49' erfassende Bildpixel des Sensors 43 zugeordnet werden können. Der Sub-Sensorbereich 42 ist somit korrespondierend zum Lichtauftreffbereich 49' definierbar.

Gemäss einer alternativen Ausführungsform (hier nicht gezeigt) kann die Markiereinheit 46 ein Strahllenkeinheit aufweisen, mittels derer eine Veränderung der Emissionsrichtung des Markierlichts 47 durchführbar ist und damit die Position der Lichtmarkierung 48 veränderbar bzw. einstellbar ist. Dies kann abhängig vom Abstand zum Objekt erfolgen. Die Strahllenkeinheit kann hierfür gattungsgemässe optische Elemente wie beispielsweise Spiegel oder Prismen aufweisen.

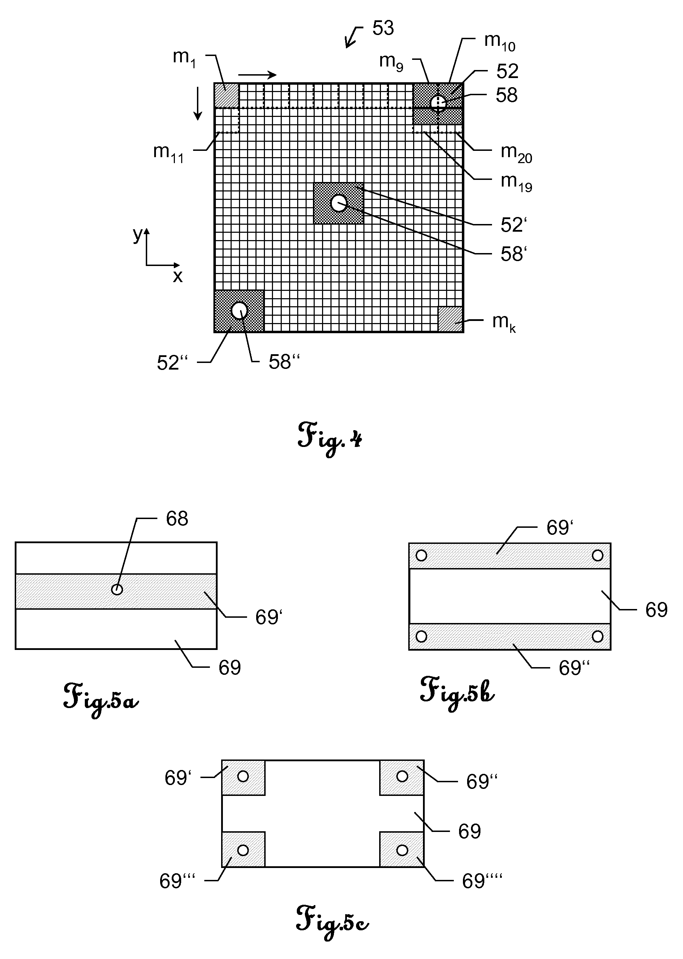

Fig. 4 zeigt ein Prinzip eines erfindungsgemässen Bildaufnahmeverfahrens für ein Bildaufnahmegerät mit einem Bildsensor 53 gemäss der Erfindung.

Die Erfassungsfläche des Sensors 53 weist wiederum eine Vielzahl von Bildpixeln zum Erfassen eines Bildes auf. Innerhalb dieser Erfassungsfläche sind zudem Markierlichterfassungsbereiche 52-52" als Teilflächen definiert, denen jeweils eine bestimmte Gruppe von Sub-Bildpixeln aus der Vielzahl der Bildpixel zugeordnet ist. Die durch eine Markiereinheit auf einem aufzunehmenden Objekt oder auf einer Auflagefläche erzeugbaren Lichtmarkierungen, sind innerhalb eines durch das Bildaufnahmegerät definierten Bilderfassungsbereichs so erzeugbar, dass diese bei Betrieb des Bildaufnahmegeräts (und damit der Markiereinheit) mit dem Bildsensor 53 innerhalb der Markierlichterfassungsbereiche 52-52" als entsprechende Lichtpunkte 58-58" erfasst würden. Die Lichtmarkierungen dienen einem Benutzer des Bildaufnahmegeräts als Orientierungshilfen für das Platzieren eines aufzunehmenden Objekts, so dass dieses in gewünschter Weise bildhaft aufgenommen werden kann.

Die Lichtmarkierungen können hierfür z.B. durch eine einzige Strahlquelle und ein Aufteilen des Emittierten Lichts, insbesondere mittels eines Strahlteilers, in drei (oder mehrere) Teillichtstrahlen oder beispielsweise mittels dreier Strahlquellen, insbesondere Laserdioden, erzeugt werden.

Ein erfindungsgemässes Bilderfassen erfolgt mit dem Sensor 53 durch ein segmentiertes und zeitlich versetztes Sammeln von Bildinformation durch unterschiedliche Pixelgruppen m₁-mₖ. Das Sammeln der Belichtungsinformation erfolgt hierbei im Gegensatz zu den Sensoren gemäss den Figuren 2 und 3a nicht zeilenweise (die einzelnen Pixelgruppen entsprechen nicht den Bildpixeln jeweils einer Sensorzeile), sondern entsprechend den festgelegten Pixelgruppen m₁-mₖ "bereichsweise" (pixelgruppenweise). Die Pixelgruppen m₁-mₖ umfassen hierbei jeweils Bildpixel, die jeweils eine Teilfläche der gesamten Erfassungsfläche bilden.

Es werden somit die Pixelgruppen m₁-mₖ nacheinander zur Sammlung der Belichtungsinformation angesteuert. Beispielsweise wird zuerst die Pixelgruppe m₁ derart angesteuert, dass diese Gruppe von Pixeln m₁ belichtet wird (das Belichten erfolgt durch eine elektronische Ansteuerung der jeweiligen Bildpixel und ist in diesem Zusammenhang nicht zu verstehen als ein tatsächliches Beleuchten der Pixel - das Beleuchten der Pixel kann z.B. bereits zeitlich früher beginnen und länger andauern oder auch dauerhaft erfolgen). Die Pixelgruppen m₂-m₈ werden dann zeitlich versetzt zur Gruppe m₁ und jeweils untereinander zeitlich versetzt entsprechend belichtet.

Für die Zeiträume des Belichtens der Gruppen m₉-m₁₀ erfolgt eine Ansteuerung der Markiereinheit derart, dass die Lichtmarkierung nicht durch den Markierlichterfassungsbereich 52 erfasst wird. Die Lichtmarkierung wird für die Dauer der Belichtung der Gruppen m₉-m₁₀ beispielsweise abgeschaltet oder umgelenkt. Für die Belichtung der nachfolgenden Pixelgruppe m₁₁ kann die Lichtmarkierung wieder aktiviert werden. Im Allgemeinen bedeutet dies, dass die jeweilige Lichtmarkierung für das Sammeln von Belichtungsinformation mit solchen Pixelgruppen m₉-m₁₀, m₁₉-m₂₀, die mindestens ein Pixel eines Markierlichterfassungsbereiche 52-52" aufweisen, angepasst, d.h. insbesondere unterbrochen, wird. Für das Belichten der restlichen Gruppen kann die Lichtmarkierung hingegen aktiviert sein.

Es versteht sich, dass die Erfindung nicht beschränkt ist auf eine Gestaltung der Pixelgruppen wie gezeigt (Figuren 2, 3a und 4), sondern vielmehr Ausführungen mit alternativ definierten Pixelgruppen umfasst, wie beispielsweise Pixelgruppen, die jeweiligen Sensorspalten entsprechen und spaltenweise belichtet werden oder Pixelgruppen, die lediglich einen einzelnen Bildpixel umfassen (was einem pixelweisen Sammeln von Belichtungsinformation entspricht).

Darüber hinaus können im Rahmen der Erfindung Pixelgruppen unterschiedlicher Grösse, d.h. hinsichtlich jeweiliger Anzahl und/oder Konstellation von Bildpixeln, definiert sein. Z.B. können die Pixelgruppen m₁-m₈ oder m₁-m₈ und m₁₁-m₁₈ gemäss Fig. 4 als eine erste Gruppe angesteuert werden und die Gruppen m₉-m₁₀ oder m₉-m₁₀ und m₁₉-m₂₀ eine zweite Gruppe bilden.

Es versteht sich ferner, dass das zeitlich versetzte Belichten der Pixelgruppen, d.h. das Sammeln der Belichtungsinformation mit den einzelnen Pixelgruppen, wiederholt erfolgen kann, so dass dem Belichten der "letzten" Pixelgruppe (mₖ, nₘ) des Erfassungsbereichs zeitlich versetzt das Belichten der "ersten" Pixelgruppe (m₁, n₁) folgt. Dadurch ist eine fortlaufende Bilderfassung und -erzeugung entsprechend dem gesamten Erfassungsbereich möglich. Insbesondere erfolgt dies mit einer Frequenz von mindestens 30-60 fps (frames per second).

Die Figuren 5a-e zeigen jeweilige Bildaufnahmebereiche 69 von spezifischen Ausführungsformen erfindungsgemässer Bildaufnahmegeräte mit jeweiligen Lichtauftreffbereichen 69'-69'''', wobei die jeweiligen durch vorgesehene Markiereinheiten erzeugbaren Lichtmarkierungen 68 innerhalb der zugeordneten Lichtauftreffbereiche 69'-69'''' erzeugt werden.

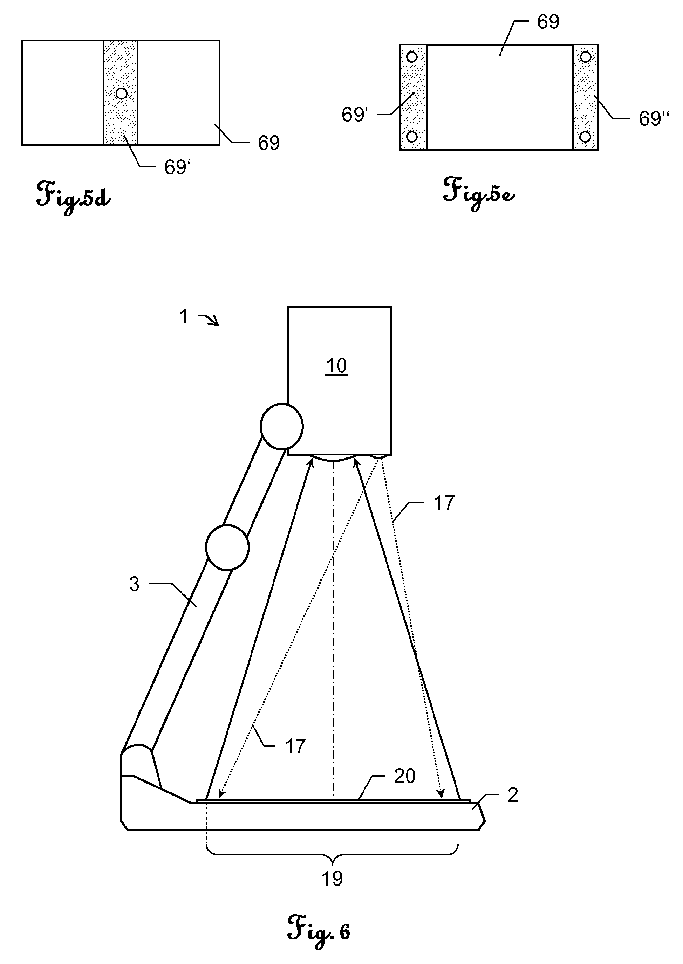

Die Lichtauftreffbereiche 69'-69'''' sind jeweils so definiert, dass ein effizientes Bilderfassen mit dem jeweiligen pixelweise belichtbaren und auslesbaren Bildsensor durchführbar ist. Im Speziellen sind somit die Bereiche 69'-69'' der Figuren 5a und 5b für ein zeilenweises, die Bereiche 69'-69'''' der Figur 5c für ein bereichsweises (in Teilflächen) und die Bereiche 69'-69" der Figuren 5d und 5e für ein spaltenweises Belichten und Auslesen bereitgestellt.

Gemäss alternativen erfindungsgemässen Ausführungen (nicht gezeigt) kann die Lichtmarkierung beispielsweise in Form einer Linie oder eines gewünschten Musters erzeugt werden.

Fig. 6 zeigt eine erfindungsgemässe Vorrichtung 1 zum Visualisieren eines Objekts 20 mit einem Bildaufnahmegerät 10 mit einer im Wesentlichen flachen, waagrechten Auflagefläche 2, auf welche das Objekt 20, hier in Form einer flachen Bildplatte, aufgelegt werden kann. Oberhalb der Auflagefläche 2 erstreckt sich ein gelenkiger Arm 3, der die Auflagefläche 2 mit einem Bildaufnahmegerät 10 verbindet und mittels welchem das Bildaufnahmegerät 10 relativ zur Auflagefläche 2 ausrichtbar ist.

Anhand einer solchen Vorrichtung 1 kann der Teil des Objekts 20 in einem Bild abgebildet werden, der innerhalb des durch das Bildaufnahmegerät 10 definierten Bildaufnahmebereichs 19 liegt. Der Bildaufnahmebereich 19 ist insbesondere durch ein Zoom-Objektiv des Bildaufnahmegeräts 10 oder ein Verändern des Abstands zwischen dem Bildaufnahmegerät 10 und der Auslagefläche 2 einstellbar.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren zur Visualisierung (Bilderfassung) von Objekten und mit Bildaufnahmegeräten, wie einem "Visualizer", des Stands der Technik kombiniert werden.

## Patentansprüche

1. Bildaufnahmeverfahren zur Bilderfassung mit einem Bildaufnahmegerät (10,40), wobei das
Bildaufnahmegerät (10,40) aufweist
• eine Kamera (14,44) mit einem Bildsensor (13,43,53) und einem Objektiv (12), wobei
□ die Kamera (14,44) einen in einem Bild erfassbaren und zumindest mittels des Objektivs (12) einstellbaren Bildaufnahmebereich (19,49,69) definiert und
□ der Bildsensor (13,43,53) eine Erfassungsfläche mit einer Vielzahl von Bildpixeln zur Bilderfassung aufweist und die Bildpixel in Pixelgruppen (31,m₁-mₖ, n₁-nₘ) ansteuerbar und auslesbar sind, und
• eine Markiereinheit (16,46) mit einer Lichtquelle zur Emission von Markierlicht (17,47),
wobei im Rahmen des Bildaufnahmeverfahrens erfolgen
• ein Emittieren des Markierlichts (17,47) derart, dass eine visuell wahrnehmbare Lichtmarkierung (18,48,68) innerhalb des Bildaufnahmebereichs (19,49,69) erzeugt wird, und
• ein Bilderfassen des Bildaufnahmebereichs (19,49,69) mittels der Kamera (14,44),
**dadurch gekennzeichnet, dass**
• das Emittieren des Markierlichts (17,47) derart vorbestimmt erfolgt, dass die Lichtmarkierung (18,48,68) innerhalb eines dieser zugewiesenen und einen Teilbereich des Bildaufnahmebereichs (19,49,69) bildenden Lichtauftreffbereichs (49',69'-69'''') erzeugt wird und der Lichtauftreffbereich (49',69'-69'''') durch eine Teilmenge bekannter Sub-Bildpixel (32,42,52-52'') aus der Vielzahl von Bildpixeln erfassbar ist, und
• das Bilderfassen mit einem pixelgruppenweise zeitlich versetztem Sammeln von Belichtungsinformation erfolgt, wobei für das Sammeln der Belichtungsinformation für jede Pixelgruppe (31,m₁-mₖ, n₁-nₘ), welche mindestens ein Sub-Bildpixel (32,42,52-52") umfasst, das Emittieren des Markierlichts (17,47) angepasst, insbesondere unterbrochen, wird.

2. Bildaufnahmeverfahren nach Anspruch 1,
**dadurch gekennzeichnet, dass**
für jede Pixelgruppe (31,m₁-mₖ,n₁-nₘ) ein bestimmter Belichtungszeitraum definiert ist und das Sammeln der Belichtungsinformation im Rahmen des jeweiligen Belichtungszeitraums erfolgt,
insbesondere wobei das Sammeln der Belichtungsinformation
• pixelgruppenweise sukzessive mit zeitlich einander nachfolgenden Belichtungszeiträumen und/oder
• pixelgruppenweise zeitlich überlappend mit überlappenden Belichtungszeiträumen erfolgt.

3. Bildaufnahmeverfahren nach Anspruch 1 oder 2,
**dadurch gekennzeichnet, dass**
das Sammeln der Belichtungsinformation und ein Auslesen der jeweils gesammelten Belichtungsinformation für jeweilige Pixelgruppen (31,m₁-mₖ,n₁-nₘ)
• innerhalb eines gemeinsamen Zeitfensters erfolgt, insbesondere gleichzeitig, insbesondere wobei die Belichtungsinformation während des Auslesens gesammelt wird, oder
• zeitlich versetzt erfolgt, insbesondere zeitlich aufeinander abgestimmt, insbesondere synchronisiert.

4. Bildaufnahmeverfahren nach einem der Ansprüche 1 bis 3,
**dadurch gekennzeichnet, dass**
die Pixelgruppen (31,m₁-mₖ,n₁-nₘ) jeweils eine Teilfläche aus benachbarten Bildpixeln der Erfassungsfläche repräsentieren.

5. Bildaufnahmeverfahren nach einem der Ansprüche 1 bis 4,
**dadurch gekennzeichnet, dass**
die Pixelgruppen (31,m₁-mₖ,n₁-nₘ) jeweils eine lineare Abfolge von benachbarten Bildpixeln repräsentieren, insbesondere wobei jede Pixelgruppe (31,m₁-mₖ,n₁-nₘ) mindestens einer Sensorzeile (31,n₁-nₘ) oder mindestens einer Sensorspalte der Erfassungsfläche entspricht.

6. Bildaufnahmeverfahren nach einem der Ansprüche 1 bis 5,
**dadurch gekennzeichnet, dass**
der Lichtauftreffbereich (49',69'-69'''') derart festgelegt ist, dass die Fläche des Lichtauftreffbereichs (49',69'-69'''') zwischen 5% und 60% der Fläche des Bildaufnahmebereichs (19,49,69) umfasst, insbesondere zwischen 10% und 50%, insbesondere wobei die Sub-Bildpixel (32,42,52-52") zwischen 5% und 60% der Bildpixel der Erfassungsfläche aufweisen, insbesondere zwischen 10% und 50%.

7. Bildaufnahmeverfahren nach einem der Ansprüche 1 bis 6,
**dadurch gekennzeichnet, dass**
das Emittieren des Markierlichts (17,47) derart erfolgt, dass die Lichtmarkierung (18,48,68) als
• mindestens ein Lichtpunkt (68), insbesondere in der Mitte des Bildaufnahmebereichs (19,49,69), und/oder
• ein Lichtmuster, insbesondere Linie,
erzeugt wird.

8. Bildaufnahmeverfahren nach einem der Ansprüche 1 bis 7,
**dadurch gekennzeichnet, dass**
beim Erfassen des Bildaufnahmebereichs (19,49,69) ein Abstand (d,d₁,d₂) zwischen dem Objektiv (12) und einem zu erfassenden Objekt (20) von 0,3 m bis 15 m, insbesondere von 0,4 m bis 10 m, vorliegt, insbesondere wobei
• eine Fokussierung des Markierlichts (17,47) in Abhängigkeit von dem Abstand (d,d₁,d₂) automatisch nachgeführt wird und/oder
• eine Emissionsrichtung des Markierlichts (17,47) in Abhängigkeit von dem Abstand (d,d₁,d₂) angepasst wird, insbesondere derart, dass die
Lichtmarkierung (18,48,68) fortlaufend an einer gewünschten Position erzeugt wird, insbesondere in einem Schnittpunkt der optischen Achse der Kamera (14a,44a) mit dem
Bildaufnahmebereich (19, 49, 69).

9. Bildaufnahmeverfahren nach einem der Ansprüche 1 bis 8,
**dadurch gekennzeichnet, dass**
das Erfassen des Bildaufnahmebereichs (19,49,69) wiederholt mit einer bestimmten Frequenz erfolgt, wobei das Sammeln der Belichtungsinformation für die jeweiligen Pixelgruppen (31,m₁-mₖ,n₁-nₘ) mit jeweils der bestimmten Frequenz erfolgt, insbesondere wobei der Bildaufnahmebereich (19,49,69) bzw. die Pixelgruppen (31,m₁-mₖ,n₁-nₘ) 10-1000 mal pro Sekunde, insbesondere 30-60 mal pro Sekunde, erfasst bzw. ausgelesen werden.

10. Bildaufnahmeverfahren nach einem der Ansprüche 1 bis 9,
**dadurch gekennzeichnet, dass**
das Emittieren und/oder das Anpassen des Emittierens des Markierlichts (17,47) abgestimmt mit dem Sammeln der Belichtungsinformation für jene Pixelgruppen (31,m₁-mₖ, n₁-nₘ) erfolgt, welche mindestens ein Sub-Bildpixel (32,42,52-52') umfassen, insbesondere wobei das Emittieren gepulst erfolgt, die Lichtquelle sequenziell abgeschaltet wird und/oder die Emission des Markierlichts (17,47) geblockt oder umgelenkt wird.

11. Bildaufnahmegerät (10,40) zum Erfassen eines Bilds, mit
• einer Kamera (14,44) mit einem Bildsensor (13,43,53) und einem Objektiv (12), wobei
□ die Kamera (14,44) einen in einem Bild erfassbaren und zumindest mittels des Objektivs (12) einstellbaren Bildaufnahmebereich (19,49,69) definiert und
□ der Bildsensor (13,43,53) eine Erfassungsfläche mit einer Vielzahl von Bildpixeln zur Bilderfassung aufweist und die Bildpixel in Pixelgruppen (31,m₁-mₖ, n₁-nₘ) ansteuerbar und auslesbar sind, und
• einer Markiereinheit (16,46) mit einer Lichtquelle zur Erzeugung einer visuell wahrnehmbaren Lichtmarkierung (18,48,68) innerhalb des Bildaufnahmebereichs (19,49,69) mittels Emission von Markierlicht (17,47),
**dadurch gekennzeichnet, dass**
• die Markiereinheit (16,46) derart ausgebildet und angeordnet ist, dass der erzeugbaren Lichtmarkierung (18,48,68) mindestens ein definierter Lichtauftreffbereich (49',69'-69'''') in dem Bildaufnahmebereich (19,49,69) zuweisbar ist und der Lichtauftreffbereich (49',69'-69'''') durch eine Teilmenge bekannter Sub-Bildpixel (32,42,52-52") aus der Vielzahl von Bildpixeln erfassbar ist, und
• das Bildaufnahmegerät (10,40) einen dadurch definierten Bilderfassungsmodus bereitstellt, dass in dessen Rahmen der Bildaufnahmebereich (19,49,69) mit einem pixelgruppenweise sukzessiven Sammeln von Belichtungsinformation derart gesteuert in einem Bild erfassbar ist, dass für das Sammeln der Belichtungsinformation für jede Pixelgruppe (31,m₁-mₖ, n₁-nₘ), welche mindestens ein Sub-Bildpixel (32,42,52-52") umfasst, die erzeugbare Lichtmarkierung (18,48,68) anpassbar, insbesondere unterbrechbar, ist,
so dass durch Ausführung des Bilderfassungsmodus, insbesondere gesteuert durch eine Steuerungseinheit (15) des Bildaufnahmegeräts (10,40), der Bilderfassungsbereich (19,49,69) in seiner Gesamtheit frei von der Lichtmarkierung (18,48,68) erfassbar ist, insbesondere auslesbar ist.

12. Bildaufnahmegerät (10,40) nach Anspruch 11,
**dadurch gekennzeichnet, dass**
• die Markiereinheit (16,46) derart ausgebildet und angeordnet ist, dass eine Ausbreitungsachse des emittierten Markierlichts (17,47) in einer Ebene (E) liegt, die festgelegt ist durch eine zur optischen Achse der Kamera (14a,44a) parallele, insbesondere koaxiale, und den Lichtauftreffbereich (49',69'-69'''') schneidende Achse und durch eine Ausleserichtung für das Auslesen der Pixelgruppen (31, m₁-mₖ, n₁-nₘ), insbesondere durch eine Erstreckungsrichtung von Sensorzeilen (31,n₁-nₘ) oder Sensorspalten der Erfassungsfläche des Bildsensors (13,43,53), oder
• die Markiereinheit (16,46) und die Kamera (14,44) derart ausgebildet und angeordnet sind, dass das emittierbare Markierlicht (17,47) in den Strahlengang der Kamera (14,44) eingekoppelt wird.

13. Bildaufnahmegerät (10,40) nach Anspruch 11 oder 12,
**dadurch gekennzeichnet, dass**
das Bildaufnahmegerät (10,40) mehrere Bildsensoren (13,43,53) und insbesondere mehrere Objektive (12) aufweist, wobei der Bildaufnahmebereich (19,46,69) mittels der mehreren Bildsensoren (13,43,53) erfassbar ist und eine der Pixelgruppen (31,m₁-mₖ,n₁-nₘ) zumindest durch einen Teilbereich eines der mehreren Bildsensoren (13,43,53), insbesondere durch mindestens einen der mehreren Bildsensoren (13,43,53), gebildet wird.

14. Bildaufnahmegerät (10,40) nach einem der Ansprüche 11 bis 13,
**dadurch gekennzeichnet, dass**
• die Markiereinheit (16,46) aufweist
□ eine einstellbare strahlfokussierende Optik zur Fokussierung des Markierlichts (17,47) und/oder
□ einstellbare Strahllenkmittel zur Anpassung einer Emissionsrichtung des Markierlichts (17,47), insbesondere in Abhängigkeit eines Abstands (d,d₁,d₂) zwischen der Kamera (14,44) und einem zu erfassenden Objekt (20), und/oder
• die Markiereinheit (16,46) zumindest eine der folgenden Komponenten aufweist:
□ eine auf einem Mikrosystem (MEMS) basierende Lasereinheit,
□ ein Projektionselement mit einem DLP-Element (digital light processing) und/oder einem DMD-Element (digital micromirror device) und/oder einem LCoS-Element (liquid crystal on silicon), und/oder
□ einen Dünnschichttransistor (TFT) oder eine Flüssigkristallanzeige (LCD), und/oder
• die Lichtquelle als Laserstrahlquelle, insbesondere Laserdiode, ausgebildet ist, insbesondere wobei die Markiereinheit (16,46) zwei oder mehrere Lichtquellen aufweist.

15. Computerprogrammprodukt, das auf einem maschinenlesbaren Träger gespeichert ist, zur Steuerung bzw. Ausführung eines Verfahrens nach einem der Ansprüche 1 bis 10, insbesondere wenn das Computerprogrammprodukt mittels einer Steuerungseinheit (15) eines Bildaufnahmegeräts (10,40) nach einem der Ansprüche 11 bis 14 ausgeführt wird.
